# EUROPEAN PATENT SPECIFICATION

(11) **EP 3 261 190 B1**
(45) Date of publication and mention of the grant of the patent: **24.07.2019**
(21) Application number: 17177440.9
(22) Date of filing: 22.06.2017
(51) Int. Cl.: H01R 13/52

(54) **ELECTRICAL CONNECTOR**
ELEKTRISCHER STECKVERBINDER
CONNECTEUR ÉLECTRIQUE

(30) Priority: 24.06.2016 JP 2016125746
(43) Date of publication of application: 27.12.2017
(73) Proprietor: Tyco Electronics Japan G.K., Kawasaki-shi, Kanagawa 213-8535 (JP); TOYOTA JIDOSHA KABUSHIKI KAISHA, Toyota-shi, Aichi 471-8571 (JP)
(72) Inventor: Matsumoto, Tsugumi, Kawasaki-shi, Kanagawa 213-8535 (JP); Komiyama, Ryuichi, Kawasaki-shi, Kanagawa 213-8535 (JP); Funayama, Tomoyuki, Toyota-shi, Aichi 471-8571 (JP)
(74) Representative: Johnstone, Douglas Ian

(56) References cited:
- EP-A2- 0 665 610
- JP-U- H0 322 367
- KR-A- 20030 004 549

## Description

### BACKGROUND OF THE INVENTION

### Field of the Invention

The present invention relates to an electrical connector, and more particularly, to an electrical connector having a light waterproofing or splash-proof performance.

### Description of the Related Art

In an electrical connector, a member called a rubber seal ring that is separate from a housing is interposed between, for example, a male housing and a female housing, so as to prevent water from entering the electrical connector. The electrical connector including this seal ring is used at a location where water is more likely to enter.

In addition to the seal ring, a technique for providing a housing with an inclined surface so as to discharge water which has entered a connector has been proposed. For example, JP2011-150895A proposes a technique for forming an inclined surface on an inner surface of a case so that water which has entered a gap between the case and the connector can flow toward an opening side. JP2011-150895A discloses that a groove extending toward the opening side is formed in the inclined surface and drainage performance can be improved due to capillary action generated by the groove.

The inclined surface disclosed in JP2011-150895A is provided between a hood of the case and the connector so as to discharge the water which has entered the connector. However, the inclined surface cannot prevent the water from entering the connector. That is, it is understood that the structure disclosed in JP2011-150895A includes a seal ring, which allows water to enter until the water reaches the position of the seal ring.

The provision of the seal ring is advantageous in terms of waterproofing, but has a problem that, for example, the number of components increases. Accordingly, in the electrical connector that is placed at a position where water is less likely to fall, there is no need to provide a seal ring and it is sufficient to provide a certain level of waterproofing performance, or a light waterproofing performance.

In general, water falls onto an upper part of an electrical connector in the vertical direction. Accordingly, the water received on the upper part of the electrical connector is highly likely to enter the gap between the hood and the connector.

JP H03 22367U, on which the preamble of claim 1 is based, discloses an electrical connector having a housing mated to a receiving space in a hood of a mating connector. The housing has a slight inclined surface starting from a point adjacent an annular groove of the electrical connector, wherein the annular groove is engaged by an annular projection of the mating connector that is set back from an entrance to the hood of the mating connector.

EP 0665610 also discloses an electrical connector having a housing mated to a receiving space in a hood of a mating connector. An inclined surface of the housing starts from a point beyond an entrance to the hood of the mating connector.

KR 20030004549 discloses an electrical connector assembly comprising an electrical connector in combination with a mating connector. The electrical connector comprises a cone, and an engagement cylinder of a slightly smaller diameter than the base of the cone that extends from the base of the cone. A distal end of the engagement cylinder engages a shoulder of an annular flange on an outside of the mating connector and a cylindrical end portion of the mating connector is received inside the engagement cylinder of the electrical connector. A threaded ring is screwed onto the outer surface of the engagement cylinder until it abuts the base of the cone and fixes the mating connector to the electrical connector.

In view of the above-mentioned circumstances, an object of the present invention is to provide an electrical connector capable of preventing water which has fallen onto an upper part of the electrical connector from entering a hood.

### SUMMARY OF THE INVENTION

An electrical connector assembly according to the present invention comprises an electrical connector in combination with a mating connector, the electrical connector comprising: a housing configured to be mated to a receiving space formed in a hood of the mating connector, wherein on a top side of the electrical connector in a usage state in which the electrical connector is mated with the mating connector, the housing includes an inclined surface having an inclination angle of more than 90° from an exposed front end of the hood of the mating connector, characterized in that the inclined surface has the inclination angle in a range from 110° to 160°, and a starting point of the inclined surface matches a front end position of the hood in a mating direction of the electrical connector and the mating connector.

The electrical connector of the present invention includes the inclined surface having the inclination angle of more than 90° at the front end of the hood of the mating connector. With this structure, when water falls onto the front end of the hood, the water which has come into contact with the inclined surface flows along the inclined surface. Thus, the water can be prevented from flowing to the back side of the gap even though the gap between the hood of the mating connector and the housing of the electrical connector is narrow enough to cause a capillary action.

According to the electrical connector of the present invention, the inclined surface having an inclination angle of more than 90° at the hood of the mating connector is provided to thereby prevent water falling onto the boundary between the hood and the top side, typically, the upper part of the electrical connector, from entering the hood.

In order to cause the water to flow along the inclined surface, the inclined surface preferably has a large inclination angle. However, as the inclination angle increases, the inclined surface occupies a larger space of the housing in the height direction, which inhibits downsizing of the electrical connector in the height direction. Therefore, the inclination angle is in the range from 110° to 160° as described above.

As will be described later in the embodiments, a side of the electrical connector that faces a printed wiring board to which the contacts are connected is defined as a bottom side, and a side of the electrical connector that is opposite to the bottom side is defined as a top side.

In many cases, the electrical connector is disposed in such a manner that the top side of the electrical connector faces upward in the vertical direction. In this arrangement of the electrical connector, water is likely to fall onto an upper part of the electrical connector.

In the electrical connector of the present invention, the housing may include the inclined surface in an entire region in a width direction of the housing, or in a part of the region.

For example, the structure of the electrical connector may make it difficult to provide the inclined surface in the entire region of the housing. If it is known that a region where water falls is limited, it is sufficient to provide the inclined surface only in a part of the region of the housing corresponding to this region.

In the electrical connector of the present invention, the inclined surface preferably has an inclination angle in a range from 135° to 140°.

When the housing of the present invention includes a flange-like rear end wall that is formed at a rear end of the housing and extends in an outer peripheral direction of the housing, the housing preferably includes a drainage channel penetrating the rear end wall in a region of the rear end wall corresponding to the inclined surface.

Although the water prevented from entering the housing may be accumulated due to the presence of the rear end wall, provision of the drainage channel allows the water to be discharged to the outside of the housing.

### BRIEF DESCRIPTION OF THE DRAWINGS

FIG. 1A and FIG. 1B are perspective views each showing an electrical connector according to an embodiment of an assembly of the present invention, FIG. 1A showing the electrical connector as viewed from a bottom side thereof in a usage state, and FIG. 1B showing the electrical connector shown in FIG. 1A as viewed from a top side thereof;
FIG. 2A and FIG. 2B each show the electrical connector of the embodiment, FIG. 2A being a longitudinal sectional view, FIG. 2B being a sectional view as viewed along a direction different from that in FIG. 2A;
FIG. 3A, FIG. 3B and FIG. 3C are diagrams for explaining a water stop function of the electrical connector of the embodiment, FIG. 3A showing an example of the embodiment in which an inclination angle θ is an obtuse angle; FIG. 3B showing a corresponding part of a typical prior art connector assembly in which the inclination angle θ is a right angle; and FIG. 3C showing an example where the inclination angle θ is 180° or two right angles;
FIG. 4A is a sectional view showing another example of the electrical connector of the embodiment; and FIG. 4B is a sectional view showing still another example of the electrical connector of the embodiment; and
FIG. 5A is a sectional view showing an example of the electrical connector included for background information; and FIG. 5B is a sectional view showing still another example of the electrical connector included for background information.

### DETAILED DESCRIPTION OF THE PREFERRED EMBODIMENTS

Embodiments of the present invention will be described below with reference to the accompanying drawings.

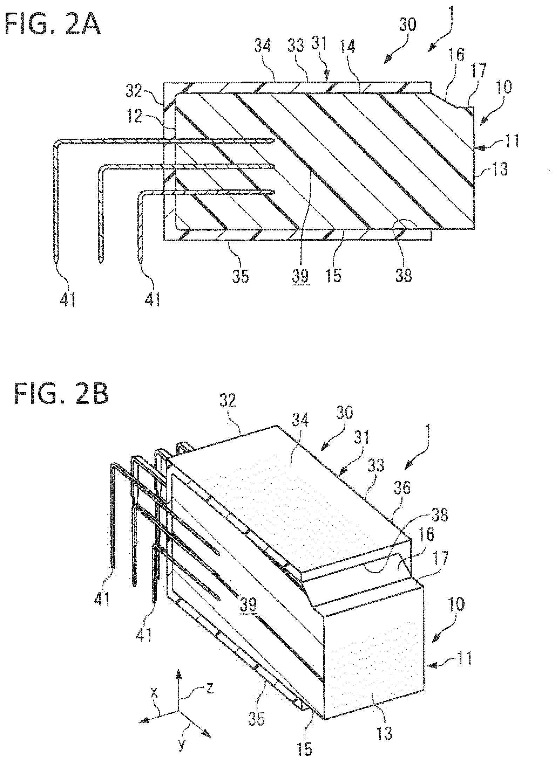

As shown in FIGS. 2A and 2B, an electrical connector 10 is fixed to, for example, a printed wiring board, and is used in a state of an electrical connector assembly 1 according to this embodiment in which the electrical connector 10 is mated with a mating connector 30. Note that the structures of the electrical connector 10 and the mating connector 30 are simplified for ease of explanation of a water stop function of this embodiment.

First, the electrical connector 10 will be described.

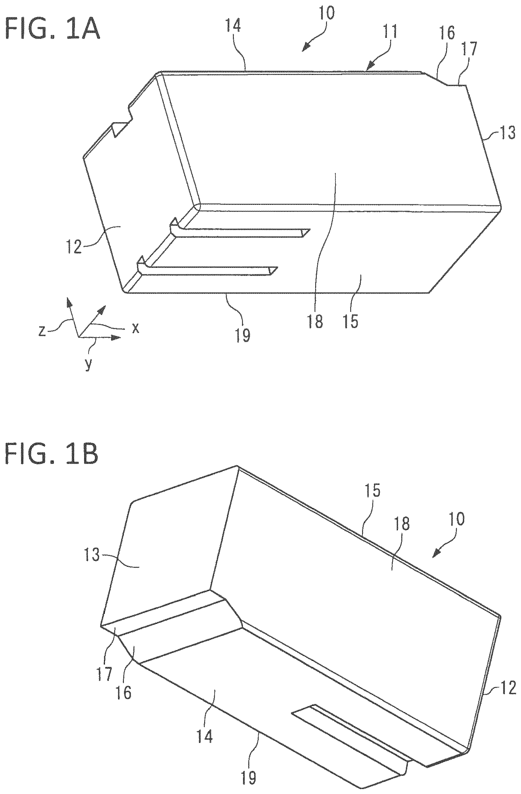

The electrical connector 10 includes a housing 11 and contacts. The housing 11 is integrally formed of resin having an electrical insulation. The contacts are formed of a material having high conductivity and elasticity, such as a copper-based material. Note that in FIGS. 1A and 1B and FIGS. 2A and 2B, the illustration of the contacts of the electrical connector 10 is omitted.

The housing 11 includes a front end wall 12 and a rear end 13. The front end wall 12 is first inserted when the electrical connector 10 is mated with the mating connector 30. The rear end 13 is opposed to the front end wall 12, and an electric wire connected to each contact is pulled out from or extends from the rear end 13. A holding hole for accommodating and holding each contact and the like are provided between the front end wall 12 and the rear end 13. However, the descriptions thereof are herein omitted. Note that in each of the electrical connector 10 and the mating connector 30, a side where the electrical connector 10 and the mating connector 30 are mated is defined as a front or front side, and a side opposite to the front side is defined as a rear or rear side.

The housing 11 includes an upper wall 14 and a lower wall 15. The upper wall 14 connects the front end wall 12 and the rear end 13 to each other. The lower wall 15 connects the front end wall 12 and the rear end 13 to each other and faces in an opposite direction to or is opposed in parallel to the upper wall 14. A part of the upper wall 14 that communicates with or joins the rear end 13 includes an inclined surface 16 and a stepped surface 17 that communicates with or joins the inclined surface 16. When the upper wall 14 that is located in front of the inclined surface 16 is defined as a reference surface, the stepped surface 17 is recessed from the reference surface and is parallel to the reference surface. The housing 11 includes the inclined surface 16, which makes it possible to prevent water W from entering a hood 33 of the mating connector 30 in a state where the electrical connector 10 is mated with the mating connector 30. This feature will be described later.

The housing 11 also includes a right side wall 18 and a left side wall 19. The right side wall 18 connects the front end wall 12 and the rear end 13 to each other. The left side wall 19 connects the front end wall 12 and the rear end 13 to each other and is opposed in parallel to the right side wall 18.

Next, as shown in FIGS. 2A and 2B, the mating connector 30 includes a housing 31 and a plurality of contacts 41 held by the housing 31. The materials of the housing 31 and the contacts 41 are the same as those of the electrical connector 10.

The housing 31 includes a holding wall 32 which is formed at a rear end of the housing 31 and holds the plurality of contacts 41 in a state where the contacts 41 are arranged at intervals. The housing 31 is provided with the hood 33 which projects forward from the holding wall 32. The hood 33 is a member having a rectangular tubular shape. A mating opening 38, which is an opening of the hood 33, is provided at an end of the hood that is opposed to the holding wall 32. The hood 33 is provided with a receiving space 39 which receives the electrical connector 10 and is formed between the holding wall 32 and the mating opening 38. The electrical connector 10 is inserted from the mating opening 38 into the receiving space 39.

As shown in FIGS. 2A and 2B, a part of each of the contacts 41 held by the holding wall 32 that is electrically connected to a contact of the electrical connector 10 extends into the receiving space 39, and another part of each of the contacts 41 that is connected to the printed wiring board (not shown) is pulled out or extends backward from the holding wall 32. As shown in FIGS. 2A and 2B, the part of each of the contacts 41 that is pulled out or extends backward is bent by 90 degrees in the middle of the contact. The contacts 41 are disposed in a plurality of columns in a width direction x and are disposed in a plurality of rows in a height direction z.

Note that in the electrical connector assembly 1 (the electrical connector 10 and the mating connector 30), a side of the electrical connector assembly that faces the printed wiring board to which the contacts 41 are connected is defined as a bottom side, and a side of the electrical connector assembly that is opposite to the bottom side is defined as a top side. Accordingly, in FIGS. 1A and 1B and FIGS. 2A and 2B, the upper side of each of the mating connector 30 and the electrical connector 10 corresponds to the top side, and the lower side thereof faces the bottom side. Even when the orientation of the electrical connector assembly 1 is changed, the definition of the top side and the bottom side remains unchanged.

The hood 33 includes an upper wall 34, a lower wall 35, and a pair of side walls 36. The upper wall 34 and the lower wall 35 extend in the width direction x and are opposed to each other with a predetermined interval or space between them in the vertical direction. The pair of side walls 36 connects in the height direction z both ends of each of the upper wall 34 and the lower wall 35 in the width direction x.

Note that in a usage state in which the mating connector 30 is mated with the electrical connector 10, the mating connector 30 according to this embodiment is disposed in such a manner that the height direction z matches the vertical direction, i.e., as shown in FIGS. 2A and 2B, and is connected to the printed wiring board, the illustration of which is omitted.

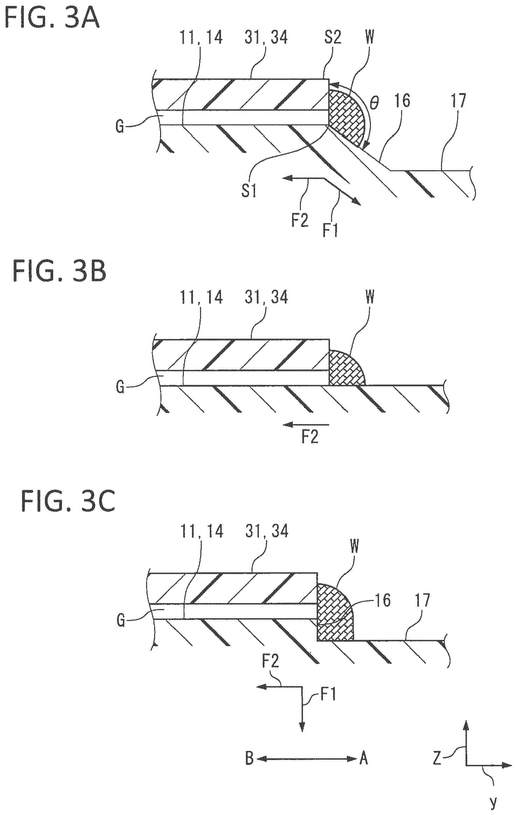

Next, the water stop function obtained by providing the inclined surface 16 and the stepped surface 17 at the rear end of the upper wall 14 of the electrical connector 10 will be described with reference to FIGS. 3A to 3C. The water stop function works in the state in which the electrical connector 10 and the mating connector 30 are mated together as shown in FIGS. 2A and 2B. FIGS. 3A to 3C illustrate a rear part of the electrical connector 10 and a front end part of the mating connector 30.

FIGS. 3A to 3C are based on the premise that the water W falls onto a boundary between the rear part of the housing 11 of the electrical connector 10 and the front end part of the housing 31 of the mating connector 30 and the water W adheres to the boundary. In this case, since a gap G between the upper wall 14 of the housing 11 and the upper wall 34 of the mating connector 30 is narrow, the water W adhering to the boundary is likely to flow through the gap G toward the back of the housing 31, i.e., toward a front side B, due to the capillary action.

If the upper wall 14 of the electrical connector 10 forms a uniform flat surface and the gap G is not present, the water W tends to stay at the position. However, as shown in FIG. 3B, when the water W is in contact with the gap G, a force F2 toward the front side B of the gap G acts on the water W due to the capillary action, which causes the water to be drawn toward the front side B.

However, in the case of the embodiment shown in FIG. 3A, the inclined surface 16 is provided. With this structure, when the water W adhering to the boundary between the housing 11 and the housing 31 and the water W contacts the inclined surface 16, a resultant force F1 of a downward component and a component along the rear side A is generated on the water W, which causes the water W to flow along the inclined surface 16. The force F2 is also generated on the water W in the direction of the front side B due to the capillary action in the gap G. However, if the inclination angle θ of the inclined surface 16 is adjusted in such a manner that F1 is set to be larger than F2, the water W can be prevented from being drawn toward the front side B of the gap G. This is the water stop function of the present invention. The force F2 that causes the water W to enter the gap G can be reduced by increasing the contact angle of the water W that is physically in contact with the gap G.

The inclination angle θ is the angle between a perpendicular to the upper wall 14 of the housing 11 and the inclined surface 16. In this embodiment, it is a minimum requirement that the inclination angle θ of the inclined surface 16 exceeds 110° so as to cause the force F1 including a component in a direction different from that of the force F2. The inclination angle θ is 160° at maximum. As the inclination angle θ increases, the contact angle of the water W increases, so that the water stop function for preventing the water W from flowing toward the front side B of the gap G is more likely to be fufilled. The inclination angle θ is preferably 120° or more, and more preferably 130° or more.

On the other hand, when the water stop effect due to gravity is taken into consideration, it is preferable to apply a force to the water W in a direction away from the gap G. As the inclination angle θ of the inclined surface 16 increases, the ratio of the space in the height direction z of the electrical connector 10 that is occupied by the inclined surface 16 increases, which inhibits downsizing of the housing 11 in the height direction z. In view of the above, it is necessary to suppress the inclination angle θ, and the inclination angle θ is preferably 150° or less, and more preferably 140° or less.

Most preferably, the inclination angle θ is in a range from 135° to 140°.

The present invention is not limited to the above embodiments. The structures illustrated in the above embodiments may be selected or omitted, or may be modified as appropriate to other structures without departing from the scope of the claimed invention.

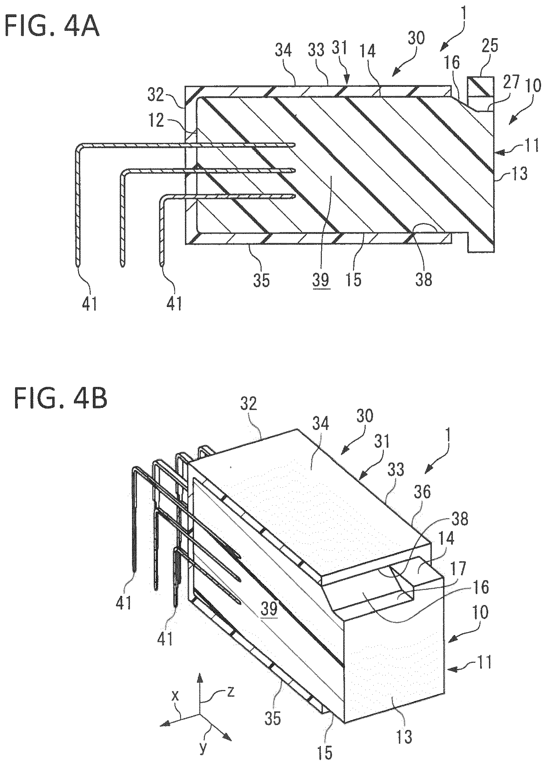

For example, as shown in FIG. 4A, when the electrical connector 10 includes a flange-like rear end wall 25 which is formed at a rear end of the electrical connector 10 and extends in the outer peripheral direction, it is preferable to provide a drainage channel 27 which penetrates the rear end wall 25 so as to cause the water W flowing along the inclined surface 16 to further flow to the outside of the electrical connector. The drainage channel 27 may be continuously formed in the width direction x, or may be intermittently formed. It is preferable to provide the drainage channel 27 in at least a region corresponding to a region in which the inclined surface 16 is provided.

Further, the above embodiment illustrates an example of the electrical connector 10 in which the inclined surface 16 is provided in the entire region in the width direction x. However, the present invention is not limited to this example. For example, as shown in FIG. 4B, the inclined surface 16 may be provided only in a part of the region at a central part of the electrical connector 10 in the width direction x. Although the illustration is omitted, the inclined surface 16 may be provided only in a part of the end of the electrical connector 10 in the width direction x, unlike in FIG. 4B. For example, the structure of the electrical connector 10 may make it difficult to provide the inclined surface 16 in the entire region of the housing 11 in the width direction x. Further, if it is known that a region where water W falls down is limited, it is sufficient to provide the inclined surface 16 only in a part of the region of the housing 11 corresponding to this region.

As shown in FIG. 3A, in the electrical connector 10 described above, a starting point S1 of the inclined surface 16 matches a front end position S2 of the hood 33 in a mating direction y. However, electrical connectors included for background information are not limited to this example.

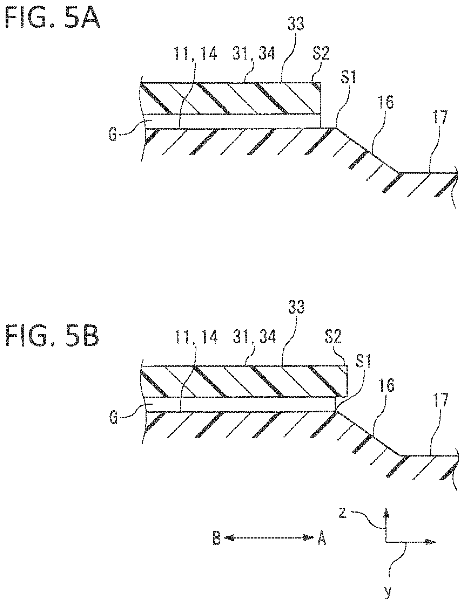

For example, as shown in FIG. 5A, even when the starting point S1 of the inclined surface 16 is shifted to the rear side A relative to the front end position S2 of the hood 33, the force F2 acts on the water W, so that the advantageous effects of the present invention can be achieved. On the contrary, as shown in FIG. 5B, even when the starting point S1 of the inclined surface 16 is shifted to the front side B relative to the front end position S2 of the hood 33, if the amount of shift is small, the force F2 acts on the water W, so that the advantageous effects of the present invention can be achieved. Thus, the present invention includes a mode in which the starting point S1 of the inclined surface 16 is different from the front end position S2 of the hood 33. However, according to the present invention, the starting point S1 of the inclined surface 16 is in line with the front end position S2 of the hood 33 in the height direction.

Although the above embodiments are based on the premise that the top side of each of the electrical connector 10 and the mating connector 30 is directed upward in the vertical direction, the present invention is not limited to this example. The present invention is also effective when, for example, the mating direction y in which the electrical connector 10 and the mating connector 30 are mated together matches the vertical direction and a certain side of the inclined surface 16 is directed downward in the vertical direction.

## Claims

1. An electrical connector assembly (1) comprising an electrical connector (10) in combination with a mating connector (30), the electrical connector (10) comprising:
a housing (11) configured to be mated to a receiving space (39) formed in a hood (33) of the mating connector (30), wherein
on a top side (14) of the electrical connector (10) in a usage state in which the electrical connector (10) is mated with the mating connector (30), the housing (11) includes an inclined surface (16) having an inclination angle (θ) of more than 90° from an exposed front end of the hood (33) of the mating connector (30),
**characterized in that**
the inclined surface (16) has the inclination angle (θ) in a range from 110° to 160°; and
a starting point of the inclined surface (16) matches a front end position (S2) of the hood (33) in a mating direction (y) of the electrical connector (10) and the mating connector (30).

2. The electrical connector assembly according to claim 1, wherein the housing (11) includes the inclined surface (16) in an entire region in a width direction of the housing, or in a part of the region.

3. The electrical connector assembly according to claim 1 or 2, wherein the inclined surface (16) has an inclination angle in a range from 135° to 140°.

4. The electrical connector assembly according to claim 1, 2 or 3, wherein
the housing (11) comprises:
a flange-like rear end wall (25) that is formed at a rear end of the housing (11) in an outer peripheral direction of the housing; and
a drainage channel (27) penetrating the rear end wall (25) in a region of the rear end wall (25) corresponding to the inclined surface (16).

## Patentansprüche

1. Elektrische Verbinderbaugruppe (1), die einen elektrischen Verbinder (10) in Kombination mit einem Gegenverbinder (30) umfasst, wobei der elektrische Verbinder (10) Folgendes umfasst:
ein Gehäuse (11), konfiguriert zum Zusammenstecken mit einem Aufnahmeraum (39), der in einer Haube (33) des Gegenverbinders (30) ausgebildet ist, wobei
das Gehäuse (11) auf einer Oberseite (14) des elektrischen Verbinders (10) in einem Gebrauchszustand, in dem der elektrische Verbinder (10) mit dem Gegenverbinder (30) zusammengesteckt ist, eine geneigte Fläche (16) mit einem Neigungswinkel (θ) von mehr als 90° von einem exponierten Frontende der Haube (33) des Gegenverbinders (30) aufweist,
**dadurch gekennzeichnet, dass**
der Neigungswinkel (θ) der geneigten Fläche (16) in einem Bereich von 110° bis 160° liegt; und
ein Anfangspunkt der geneigten Fläche (16) mit einer vorderen Endposition (S2) der Haube (33) in einer Zusammensteckrichtung (y) des elektrischen Verbinders (10) und des Gegenverbinders (30) übereinstimmt.

2. Elektrische Verbinderbaugruppe nach Anspruch 1, wobei die geneigte Fläche (16) des Gehäuses (11) in einer gesamten Region in einer Breitenrichtung des Gehäuses oder in einem Teil der Region liegt.

3. Elektrische Verbinderbaugruppe nach Anspruch 1 oder 2, wobei die geneigte Fläche (16) einen Neigungswinkel im Bereich von 135° bis 140° hat.

4. Elektrische Verbinderbaugruppe nach Anspruch 1, 2 oder 3, wobei
das Gehäuse (11) Folgendes umfasst:
eine flanschähnliche hintere Endwand (25), die an einem hinteren Ende des Gehäuses (11) in einer äußeren peripheren Richtung des Gehäuses ausgebildet ist; und
einen Ablaufkanal (27), der die hintere Endwand (25) in einer Region der hinteren Endwand (25) entsprechend der geneigten Fläche (16) penetriert.

## Revendications

1. Ensemble connecteur électrique (1) comprenant un connecteur électrique (10) en combinaison avec un connecteur d'accouplement (30), le connecteur électrique (10) comprenant :
un logement (11) configuré de façon à être accouplé à un espace de réception (39) formé dans un capuchon (33) du connecteur d'accouplement (30), dans lequel
sur un côté supérieur (14) du connecteur électrique (10) dans un état d'usage dans lequel le connecteur électrique (10) est accouplé avec le connecteur d'accouplement (30), le logement (11) inclut une surface inclinée (16) ayant un angle d'inclinaison (θ) de plus de 90° à partir d'une extrémité avant exposée du capuchon (33) du connecteur d'accouplement (30),
**caractérisé en ce que**
la surface inclinée (16) a un angle d'inclinaison (θ) dans une gamme allant de 110° à 160° ; et
un point de départ de la surface inclinée (16) correspond à une position d'extrémité avant (S2) du capuchon (33) dans un sens d'accouplement (y) du connecteur électrique (10) et du connecteur d'accouplement (30).

2. Ensemble connecteur électrique selon la revendication 1, dans lequel le logement (11) inclut la surface inclinée (16) dans une région entière dans un sens de la largeur du logement, ou dans une partie de la région.

3. Ensemble connecteur électrique selon la revendication 1 ou 2, dans lequel la surface inclinée (16) a un angle d'inclinaison dans une gamme allant de 135° à 140°.

4. Ensemble connecteur électrique selon la revendication 1, 2 ou 3, dans lequel
le logement (11) comprend :
une paroi d'extrémité arrière semblable à une bride (25) qui est formée au niveau d'une extrémité arrière du logement (11) dans un sens périphérique externe du logement ; et
un canal de drainage (27) pénétrant dans la paroi d'extrémité arrière (25) dans une région de la paroi d'extrémité arrière (25) correspondant à la surface inclinée (16).
